(19)

**Europäisches Patentamt**
**European Patent Office**
**Office européen des brevets**

(11)  **EP 1 382 170 B1**

(12)  **EUROPÄISCHE PATENTSCHRIFT**

(45) Veröffentlichungstag und Bekanntmachung des Hinweises auf die Patenterteilung:
**10.10.2007   Patentblatt 2007/41**

(21) Anmeldenummer: **01936004.9**

(22) Anmeldetag: **27.04.2001**

(51) Int Cl.:
*H04L 27/26* [(2006.01)]

(86) Internationale Anmeldenummer:
**PCT/DE2001/001622**

(87) Internationale Veröffentlichungsnummer:
**WO 2002/089436 (07.11.2002 Gazette 2002/45)**

(54) **VERFAHREN ZUR VERRINGERUNG EINES SIGNALISIERUNGSAUFWANDS IN EINEM MULTITRÄGERSYSTEM MIT DYNAMISCHER BITALLOKATION SOWIE DAZUGEHÖRIGE SENDE-/EMPFANGSVORRICHTUNG**

METHOD FOR REDUCING SIGNALING OVERHEAD IN A MULTICARRIER SYSTEM WITH DYNAMIC BIT ALLOCATION AND CORRESPONDING TRANSMITTER/RECEIVER DEVICE

PROCEDE SERVANT A LIMITER LES FRAIS DE SIGNALISATION DANS UN SYSTEME A PORTEUSES MULTIPLES AVEC ATTRIBUTION DYNAMIQUE DE BITS, ET DISPOSITIF D'EMISSION/RECEPTION CORRESPONDANT

(84) Benannte Vertragsstaaten:
**DE FR GB**

(43) Veröffentlichungstag der Anmeldung:
**21.01.2004   Patentblatt 2004/04**

(73) Patentinhaber: **SIEMENS AKTIENGESELLSCHAFT
80333 München (DE)**

(72) Erfinder:
 • **BOLINTH, Edgar
  41189 Mönchengladbach (DE)**
 • **GROETING, Wolfgang
  46354 Südlohn (DE)**
 • **KERN, Ralf
  46399 Bocholt (DE)**
 • **LOMBARDI, Giancarlo
  NL-2517 Den Haag (NL)**

(56) Entgegenhaltungen:
**WO-A-00/54473          WO-A-99/20027**

EP 1 382 170 B1

**Beschreibung**

Die Erfindung bezieht sich auf ein Verfahren zur Verringerung eines Signalisierungsaufwands in einem Multiträgersystem mit dynamischer Bitallokation sowie eine dazugehörige Sende-/Empfangsvorrichtung und insbesondere auf ein Verfahren sowie eine Vorrichtung zur Minimierung eines Signalisierungs-Overheads in einem OFDM-Datenübertragungssystem mit adaptivem Bitloading.

Herkömmliche digitale Multiträgersysteme senden und empfangen digitale Signale unter Verwendung einer Vielzahl von Unterträgern bzw. Subkanälen mit verschiedenen Frequenzen. Ein Sender teilt hierbei ein Sendesignal in eine Vielzahl von Komponenten auf, ordnet die Komponenten einem bestimmten Unterträger zu, kodiert jeden Unterträger entsprechend seiner Komponente und überträgt jeden Unterträger über einen oder mehrere Übertragungskanäle.

Die maximale Informationsmenge, die auf einem bestimmten Unterträger kodiert werden kann, ist hierbei eine Funktion des Signal/Rausch-Verhältnisses (SNR, signal to noise ratio) in Bezug auf den Unterträger. Das Signal/Rausch-Verhältnis eines Übertragungskanals kann jedoch frequenzabhängig sein, so dass eine auf einem Unterträger kodierbare maximale Informationsmenge von Unterträger zu Unterträger verschieden ist.

Das sogenannte Bitladeverfahren (Bitloading) ermöglicht in diesem Zusammenhang eine gezielte Zuordnung von jeweiligen Bits bzw. Bitwerten zu Unterträgern bzw. Subkanälen in Abhängigkeit von beispielsweise einem auf dem Unterträger vorherrschenden Signal/Rausch-Verhältnis. Ein Bitladealgorithmus liefert hierbei die Werte für eine sogenannte Bitallokationstabelle (BAT), die eine zu kodierende Informationsmenge für einen jeweiligen Unterträger angibt bzw. diesem zuordnet.

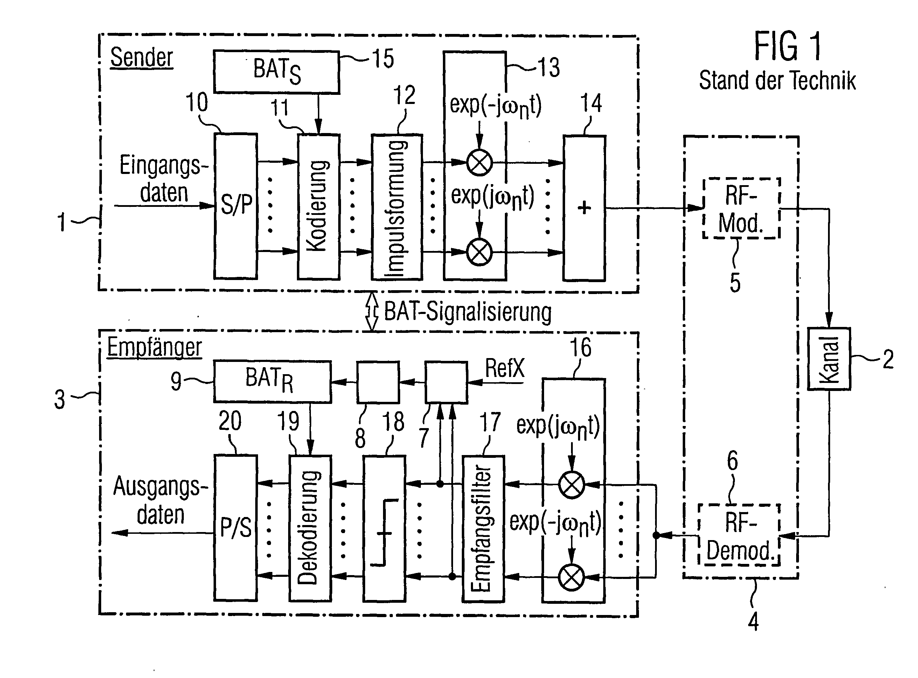

Figur 1 zeigt eine vereinfachte Blockdarstellung eines Multiträgersystems gemäß dem Stand der Technik. Das Multiträgersystem besteht hierbei im Wesentlichen aus einem Sender 1, einem Übertragungsmedium bzw. -kanal 2 und einem Empfänger 3. Bei Realisierung eines Bandpasssystems kann optional auch ein RF-Modulationssystem 4 mit einem RF-Modulator 5 und einem RF-Demodulator 6 verwendet werden.

Gemäß Figur 1 werden zu übertragende serielle Eingangsdaten zunächst beispielsweise in einem Seriell/Parallelwandler 10 in einen parallelen Datenstrom umgewandelt. Der parallele Datenstrom wird anschließend durch eine Kodierstufe 11 in Abhängigkeit von einer sendeseitigen Bitallokationstabelle 15 kodiert. Genauer gesagt wird jedem Träger eine Signalraumkonstellation zugewiesen, die abhängig von einem vorherrschenden Signal/Rausch-Verhältnis ist und im herkömmlichen Multiträgersystem als Bitallokationstabelle lediglich während einer Initialisierungs- bzw. Trainingsphase durch einen Bitladealgorithmus bestimmt bzw. optimiert wird. Das derart (im Frequenzbereich) kodierte Signal wird anschließend in einem Impulsformer 12 in geeignete Übertragungsimpulse geformt und von einem Zeitbereich-Modulator 13 in einen Zeitbereich übergeführt, wodurch beispielsweise ein Multiträgersignal erzeugt wird. Das Multiträgersignal wird nachfolgend von einem Summenbilder 14 zusammengefasst.

Am Empfänger 3, der gemäß Figur 1 zum Sender 1 symmetrisch aufgebaut ist, werden die Subkanäle bzw. Unterträger des empfangenen Signals bzw. der Eingangsdatenwerte zunächst getrennt, von einem Frequenzbereichmodulator 16 wieder in den Frequenzbereich übergeführt, in einem Empfangsfilter 17 (Tiefpass) TP-gefiltert und nach einer Vielzahl von nicht dargestellten weiteren Verarbeitungsstufen einem Entscheider 18 zugeführt. Während einer Trainingsphase werden die vor dem Entscheider 18 anliegenden Entscheider-Eingangsdatenwerte abgeleitet und mittels einer Rauschvarianz-Bestimmungsvorrichtung 7 mit empfangsseitig bekannten Referenzsignalen bzw. Referenzdatenwerden (RefX) verglichen, wodurch eine Rauschvarianz bzw. Rauschleistung der jeweiligen Entscheidereingangsdatenwerte ermittelt wird. Eine empfängerseitige Bitallokationstabelle 9 wird auf der Grundlage dieser Rauschvarianz über eine Bitladevorrichtung 8 bzw. einen darin ausgeführten Bitlade-Algorithmus beschrieben bzw. angepasst. Die sendeseitige Bitallokationstabelle 15 wird hierbei beispielsweise über einen Rück- bzw. Steuerkanal, der während einer BAT-Signalisierung erzeugt wird, mit der empfängerseitigen Bitallokationstabelle 9 abgeglichen. Der Entscheider 18 dient hierbei beispielsweise einer Zuordnung des ungenauen Entscheidereingangsdatenwertes auf einem (exakten) Wert einer vorbestimmten Wertemenge eines verwendeten Übertragungsformats (wie z.B. 4QAM). Eine nachfolgende Dekodierstufe 19 kann daraufhin beispielsweise in Abhängigkeit von den Werten der Bitallokationstabelle 9 die empfangenen Daten dekodieren, wobei ein Parallel/Seriell-Wandler 20 den parallelen Datenstrom wiederum in einen seriellen Datenstrom umwandelt.

Zur Realisierung eines adaptiven Datenübertragungssystems können derartige Bitallokationstabellen nicht nur einmalig während einer Initialisierungsphase bzw. Trainingsphase bestimmt werden, sondern in Abhängigkeit von jeweiligen Kanaleigenschaften bzw. Übertragungseigenschaften des Übertragungskanals 2 in vorbestimmten Zeitabständen kontinuierlich durchgeführt werden, wodurch man eine dynamische Bitallokation erhält. Üblicherweise werden hierbei nach einer Änderung der Kanaleigenschaften bzw. in regelmäßigen Zeitabschnitten die jeweiligen Übertragungseigenschaften ermittelt, eine dazugehörige Bitallokationstabelle bestimmt und diese während einer BAT-Signalisierung über den Rück- bzw. Steuerkanal abgeglichen. Da derartige Bitallokationstabellen jedoch ein relativ hohes Datenvolumen aufweisen, verringert sich gleichzeitig eine Nutzdatenrate des Multiträgersystems.

Aus der WO 99/20027 ist ein Modem für eine "Digital Subscriber Line" (DSL) Kommunikation bekannt, welches auf Unterbrechungen im Rahmen von "Störungen", wie sie beim Übergang vom Zustand "aufgelegt" zum Zustand "abgehoben" auftreten, durch schnelles Durchwechseln von abgespeicherten Steuerparametern, die eine Kommunikation über die Übertragungskanäle für unterschiedliche Übertragungsumstände definieren.

Der Erfindung liegt daher die Aufgabe zu Grunde, eine Verfahren zur Verringerung eines Signalisierungsaufwands in einem Multiträgersystem mit dynamischer Bitallokation sowie eine dazugehörige Sende-/Empfangsvorrichtung zu schaffen, bei der ein Signalisierungs-Overhead verringert bzw. eine Nutz-Datenrate verbessert ist.

Erfindungsgemäß wir diese Aufgabe hinsichtlich des Verfahrens durch die Maßnahmen des Patentanspruchs 1, hinsichtlich der Empfangsvorrichtung durch die Merkmale des Patentanspruchs 9 und hinsichtlich der Sendevorrichtung durch die Merkmale des Patentanspruchs 11 gelöst.

Insbesondere durch Verwendung einer BAT-Speichervorrichtung zum Abspeichern einer Vielzahl von indizierten Bitallokationstabellen kann bei Übereinstimmung einer ermittelten Bitallokationstabelle mit einer in der BAT-Speichervorrichtung abgelegten und bereits indizierten Bitallokationstabelle lediglich ein dazugehöriger Index zur Realisierung eines BAT-Abgleichs während einer Signalisierung übertragen werden, wodurch sich die während der Signalisierung übertragenen Datenmengen wesentlich verringern und somit höhere Nutzdatenraten möglich sind.

Ferner kann bei fehlender Übereinstimmung einer ermittelten Bitallokationstabelle mit einer bereits gespeicherten und indizierten Bitallokationstabelle eine Überprüfung auf eine bestimmte Anzahl von in der BAT-Speichervorrichtung gespeicherten Bitallokationstabellen durchgeführt werden, wobei bei Überschreitung einer maximalen Anzahl von gespeicherten Bitallokationstabellen eine Bestimmung einer Differenz zu einer nächstkommenden gespeicherten Bitallokationstabelle durchgeführt wird und zur Realisierung eines BAT-Abgleichs während einer Signalisierung lediglich die Differenz und der Index der nächstkommenden gespeicherten Bitallokationstabelle übertragen wird. Auf diese Weise kann wiederum bei begrenztem Speichervermögen der BAT-Speichervorrichtung ein optimierter Abgleich durchgeführt werden, wobei sich minimierte Signalisierungsdaten und eine verbesserte Ausnutzung der Nutzdatenrate ergibt.

Vorzugsweise umfasst eine Bitallokationstabelle eine Vielzahl von Unterträger-Gruppen und eine Vielzahl von dazugehörigen Gruppen-Bitwerten je Unterträger-Gruppe, wodurch im Gegensatz zu einer Bitallokationstabelle, bei der jedem Unterträger ein dazugehöriger Bitwert zugeordnet wird, wiederum eine für den BAT-Abgleich notwendige Datenmenge während einer BAT-Signalisierung verringert wird und die Nutz-Datenrate somit erhöht werden kann.

Vorzugsweise besteht das Multiträgersystem aus einem OFDM-Datenübertragungssystem (orthogonal frequency division multiplexing), bei dem insbesondere eine adaptive Modulation Anwendung findet.

Vorzugsweise besitzt die BAT-Speichervorrichtung einen Bereich mit fest vorbestimmten Bitallokationstabellen, die beispielsweise in einem ROM vorab abgelegt werden. Bevorzugte mögliche Bit-Konstellationen können demzufolge bereits vorab statisch abgelegt werden, wodurch für bestimmte Einsatzfälle eine weitere Optimierung ermöglicht ist.

In den weiteren Ansprüchen sind weitere vorteilhafte Ausgestaltungen der Erfindung gekennzeichnet.

Die Erfindung wird nachstehend anhand eines Ausführungsbeispiels unter Bezugnahme auf die Zeichnung näher beschrieben.

Es zeigen:

Figur 1    eine vereinfachte Blockdarstellung eines Multiträgersystems gemäß dem Stand der Technik;

Figur 2    eine vereinfachte Darstellung eines Flussdiagramms zur Veranschaulichung wesentlicher Verfahrensschritte gemäß einem ersten Ausführungsbeispiel;

Figur 3    eine vereinfachte Darstellung eines Flussdiagramms zur Veranschaulichung wesentlicher Verfahrensschritte gemäß einem zweiten Ausführungsbeispiel;

Figur 4    eine vereinfachte Blockdarstellung eines erfindungsgemäßen Empfängers; und

Figur 5    eine vereinfachte Blockdarstellung eines erfindungsgemäßen Senders.

Die vorliegende Erfindung wird nachfolgend anhand eines OFDM-Datenübertragungssystems (orthogonal frequency division multiplexing) mit adaptivem Bitloading beschrieben, wobei jedoch grundsätzlich auch andere Multiträgersysteme verwendet werden können, wie z.B. MC-CDMA-Modulation (Multi-Carrier Code Division Multiple Access) oder CDMA-Modulation (Code Division Multiple Access).

Die OFDM-Übertragungstechnik stellt eine Möglichkeit zur leistungsfähigen Kommunikation über Kanäle mit Intersymbol-Interferenz zur Verfügung. Diese Technik hat sich sowohl bei Anwendung zur drahtlosen Übertragung (z. B. DAB, DVB-T, Hyperline/2) als auch bei leitungsgebundener Datenübertragung (z. B. ADSL, UDSL) als geeigneter Kandidat herausgestellt. In gleicher Weise kann diese Übertragungstechnik auch bei der Nutzung des Niederspannungsnetzes für nachrichtentechnische Anwendungen verwendet werden. Derartige Datenübertragungssysteme sind beispielsweise als sogenannte "Powerline"-Übertragungssysteme bekannt.

In einem OFDM-Datenübertragungssystem mit adaptivem Bitloading berechnet sich die Datenrate so:

$$\text{Datenrate} = (N_{NUTZ} \times B_{CARRIER})/(N/B + T_{GUARD}),$$

wobei

$N_{NUTZ}$ = Anzahl der Nutzunterträger,
$B_{CARRIER}$ = mittlere Bits pro Nutzunterträger,
$N$ = Anzahl der Unterträger,
$B$ = Systembandbreite in Hz und
$T_{GUARD}$ = Guard-Zeitintervall in Sekunden.

Möchte man nun maximal m Bit pro Nutzunterträger übertragen, so muss man in bestimmten Zeitintervallen t die Modulationswertigkeit für jeden Nutzunterträger vom Empfänger zum Sender übermitteln. Geht man von einer möglichst robusten Übertragung aus, so wird maximal ein Bit pro Nutzunterträger für die Signalisierung verwendet. Damit reduziert sich die zur Verfügung stehende Datenrate auf:

$$\text{Datenrate*} = (N_{NUTZ} \times B_{CARRIER})/(N/B + T_{GUARD}) \times (1 - m \times (N/B + T_{GUARD})/t)$$

Mit beispielsweise

$$N/B + T_{GUARD} = 0,138 \text{ ms}$$

$m = 3$
$t = 5$ ms

ergibt sich damit eine zur Verfügung stehende Datenrate* von 0,9232 der Gesamtdatenrate.
m definiert hierbei die Anzahl der Bits zur Definition der Zustände im jeweiligen Modulationsalphabet.
Vorzugsweise wird bei der Erfindung davon ausgegangen, dass sich die Kanaleigenschaften zwar ändern, aber immer wieder ähnliche Verhältnisse vorliegen, wie dies insbesondere in Niederspannungsnetzwerken bzw. dem sogenannten Powerline-Netzwerk der Fall ist. Erfindungsgemäß soll hierbei ein Signalisierungs-Overhead in einem OFDM-Datenübertragungssystem mit adaptivem Bitloading minimiert werden.

Ausführungsbeispiel 1

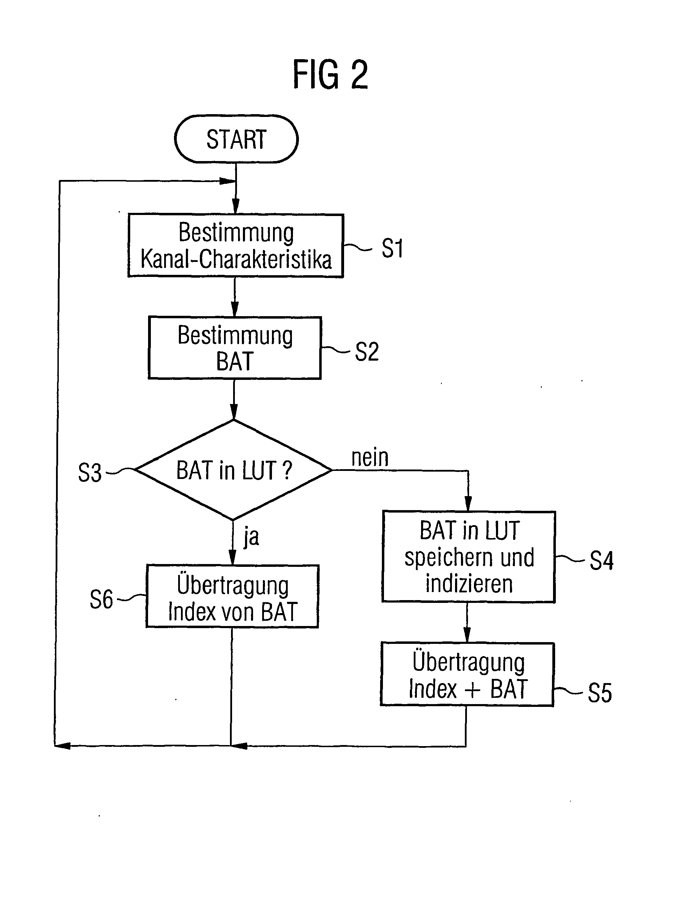

Figur 2 zeigt ein vereinfachtes Flussdiagramm zur Veranschaulichung wesentlicher Verfahrensschritte zur Verringerung eines Signalisierungsaufwands in einem Multiträgersystem gemäß einem ersten Ausführungsbeispiel.
Gemäß Figur 2 wird zunächst in einem Schritt S1 eine jeweilige Übertragungseigenschaft eines Übertragungskanals ermittelt und auf der Grundlage dieser Kanaleigenschaften in einem nachfolgenden Schritt S2 eine jeweilige Bitallokationstabelle bzw. sogenannte Bitloading-Konstellation BAT ermittelt. Im einfachsten Fall besteht eine derartige Bitallokationstabelle aus einer Vielzahl von Bitwerten, die einer Vielzahl von Unterträgern zugeordnet sind.

| Unterträger | UT1 | UT2 | UT3 | ... | UTn$_{NUTZ}$ |
|---|---|---|---|---|---|
| Bitwert | 1 Bit | 2 Bit | 1 Bit | ... | 2 Bit |

Zu Beginn einer jeweiligen Übertragung wird zwischen einem Empfänger und einem Sender die jeweils aktuelle Bitallokationstabelle BAT übertragen und sowohl im Empfänger als auch im Sender als Tabelleneintrag in einer sogenannten BAT-Speichervorrichtung bzw. einer sogenannten Bitloading-Look-up-Tabelle LUT abgelegt.

Innerhalb einer nächsten notwendigen BAT-Signalisierung zur Realisierung eines BAT-Abgleichs zwischen Empfänger und Sender wird gemäß Figur 2 in einem Schritt S3 zunächst überprüft, ob die Bitloading-Konstellation bzw. die ermittelte Bitallokationstabelle BAT bereits als Eintrag in der BAT-Speichervorrichtung LUT existiert. Genauer gesagt erfolgt hierbei ein Vergleich der ermittelten Bitallokationstabelle BAT mit in der BAT-Speichervorrichtung LUT gespeicherten Bitallokationstabellen. Falls in diesem Schritt S3 festgestellt wird, dass keine Übereinstimmung der ermittelten Bitallokationstabelle mit einer der gespeicherten Bitallokationstabellen vorliegt, so wird zunächst in einem Schritt S4 eine Abspeicherung der ermittelten Bitallokationstabelle BAT in der BAT-Speichervorrichtung LUT zusätzlich zu den bereits abgelegten Bitallokationstabellen durchgeführt und darüber hinaus eine Indizierung durchgeführt. Genauer gesagt wird bei der Abspeicherung jeder Bitallokationstabelle BAT ein Index I zugeordnet, der vorzugsweise aus einem aufsteigenden Zahlenwert besteht. Der in der BAT-Speichervorrichtung bzw. der Bitloading-Look-up-Tabelle LUT abgelegte Wert sieht demzufolge wie folgt aus:

| Index I | UT1 | UT2 | UT3 | ... | UTn$_{NUTZ}$ |
|---------|-----|-----|-----|-----|--------------|
| 1 | 1 Bit | 2 Bit | 1 Bit | ... | 2 Bit |

In einem nachfolgenden Schritt S5 wird zur Realisierung eines BAT-Abgleichs während einer Signalisierung die ermittelte Bitallokationstabelle BAT gemeinsam mit dem zugeordneten Index I übertragen und in der senderseitigen BAT-Speichervorrichtung LUT$_s$ abgelegt. Anschließend kehrt der Programmablauf wieder zum Schritt S1 zurück, wobei wiederum die Kanaleigenschaften ermittelt werden und bei einer Änderung in Schritt S2 eine dazugehörigen Bitallokationstabelle festgelegt wird.

In Schritt S3 wird hierbei wiederum ermittelt, ob die neue Bitallokationstabelle bereits in der BAT-Speichervorrichtung vorhanden ist, und falls dies wiederum nicht der Fall ist, so wird sie beispielsweise mit dem neuen Index I = 2 wiederum abgelegt und zum Abgleich an den Sender z.B. wie folgt übertragen:

| Index I | UT1 | UT2 | UT3 | ... | UTn$_{NUTZ}$ |
|---------|-----|-----|-----|-----|--------------|
| 2 | 2 Bit | 2 Bit | 1 Bit | ... | 3 Bit |

Bei diesem bisher durchgeführten Verfahren erhält man noch keine Steigerung der Nutzdatenrate, da wie beim Stand der Technik der volle Datensatz der Bitallokationstabelle BAT bei einer Signalisierung übertragen werden muss.

Ergibt sich jedoch, insbesondere zu einem späteren Zeitpunkt, zu dem bereits eine Vielzahl von Bitallokationstabellen BAT in der BAT-Speichervorrichtung LUT abgelegt sind, eine Übereinstimmung der ermittelten Bitallokationstabelle mit einer der gespeicherten Bitallokationstabellen in der BAT-Speichervorrichtung LUT, so wird erfindungsgemäß lediglich der Index I der übereinstimmenden und bereits abgespeicherten Bitallokationstabelle BAT zur Realisierung eines BAT-Abgleichs während einer Signalisierung übertragen. Liegen beispielsweise nur 32 Einträge von Bitallokationstabellen und somit lediglich 32 Indizes in der BAT-Speichervorrichtung LUT vor, so werden demzufolge zur kompletten Signalisierung der Bitloading-Konstellation bzw. Bitallokationstabelle im Idealfall nur noch 5 Bit statt beispielsweise m x N$_{NUTZ}$ = 3 x 256 = 768 Bits benötigt. Folglich findet eine erhebliche Minimierung des Signalisierungs-Overheads statt und es gilt in guter Näherung, dass die zur Verfügung stehende Nutzdatenrate gleich der Datenrate des OFDM-Datenübertragungssystems ist.

Ausführungsbeispiel 2

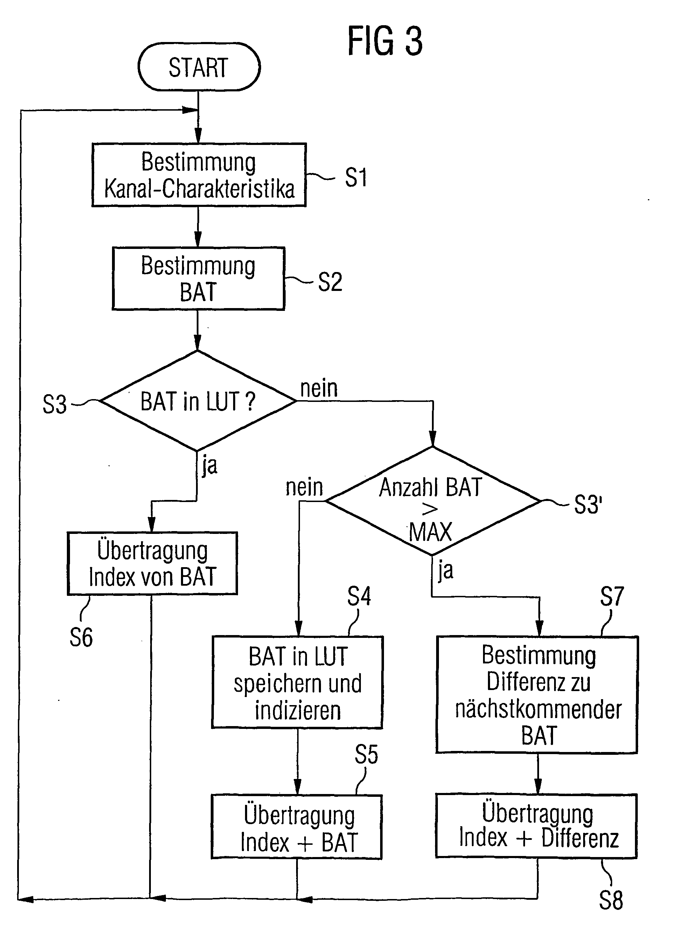

Figur 3 zeigt eine vereinfachte Darstellung eines Flussdiagramms zur Veranschaulichung wesentlicher Verfahrensschritte gemäß einem zweiten Ausführungsbeispiel, wobei gleiche Bezugszeichen gleiche oder ähnliche Verfahrensschritte bezeichnen und auf eine detaillierte Beschreibung nachfolgend verzichtet wird.

Gemäß Figur 3 wird wiederum in einem Schritt S1 eine Übertragungseigenschaft eines jeweiligen Kanals ermittelt bzw. bestimmt, wobei vorzugsweise ein Signal/Rauschverhältnis SNR herangezogen wird. Auf der Grundlage der ermittelten Kanaleigenschaften wird in Schritt S2 eine dazugehörige Bitallokationstabelle bzw. Bitloading-Konstellation BAT ermittelt bzw. festgelegt, um minimale Bitfehlerraten auf den jeweiligen Unterträgern bzw. eine maximale Datenrate auf dem Kanal zu erhalten. Wie in Figur 2 wird in einem Schritt S3 überprüft, ob die ermittelte Bitallokationstabelle BAT bereits in der BAT-Speichervorrichtung LUT abgelegt ist, wobei bei Übereinstimmung der ermittelten Bitallokationstabelle mit einer der gespeicherten Bitallokationstabellen im Schritt S6 lediglich der dazugehörige Index I der bereits abgespeicherten Bitallokationstabelle übertragen wird. Für bereits in der BAT-Speichervorrichtung abgelegte Bitallokationstabellen erhält man somit die gleiche Verringerung des Signalisierungs-Overheads wie im ersten Ausführungsbeispiel.

Gemäß Figur 3 wird jedoch bei fehlender Übereinstimmung der ermittelten Bitallokationstabelle mit den gespeicherten Bitallokationstabellen in einem Schritt S3' eine weitere Überprüfung einer Anzahl von in der BAT-Speichervorrichtung LUT gespeicherten Bitallokationstabellen dahingehend durchgeführt, dass lediglich eine maximale Anzahl von Bitallokationstabellen in der BAT-Speichervorrichtung abgespeichert wird. Auf diese Weise kann beispielsweise eine Speicherkapazität sende- und empfangsseitig wesentlich reduziert werden.

Bei einer Überschreitung der maximalen Anzahl MAX der in der BAT-Speichervorrichtung gespeicherten Bitallokationstabellen BAT bzw. wenn die Kapazität der Speichervorrichtung erreicht ist, wird in einem Schritt S7 eine Bestimmung einer Differenz D zu einer nächstkommenden gespeicherten Bitallokationstabelle durchgeführt. Genauer gesagt wird beispielsweise die ermittelte Bitallokationstabelle mit allen bereits gespeicherten Bitallokationstabellen dahingehend verglichen, dass ein Unterschied der jeweiligen Bitwerte in den jeweiligen Unterträgern minimal ist. Als nächstkommende gespeicherte Bitallokationstabelle kann beispielsweise eine gespeicherte Bitallokationstabelle ausgewählt werden, deren Mittelwert der festgestellten Unterschiede pro Unterträger minimal ist.

Die Differenz D ergibt sich hierbei aus der Nummer des jeweiligen Unterträgers sowie einem dazugehörigen Unterschiedswert zur aktuellen Bitkonstellation. Falls die sich hieraus ergebende Gesamtzahl der zu übertragenden Bits größer ist als die Übertragung der gesamten Bitallokationstabelle BAT, wird eine Übertragung der ermittelten Bitallokationstabelle erfolgen. Ist dies jedoch nicht der Fall, so wird gemäß Schritt S8 die vorher ermittelte Differenz D bestehend aus der Nummer des Unterträgers sowie des dazugehörigen Unterschiedswerts und des Index der bei der Differenzbetrachtung berücksichtigten nächstkommenden Bitallokationstabelle übertragen. Sendeseitig wird aus der übertragenen Information bestehend aus dem Index und der Differenz zur nächstkommenden Bitallokationstabelle wiederum die ermittelte Bitallokationstabelle rekonstruiert und zur Anpassung an die Kanaleigenschaften verwendet. Bei unterschiedlich großen Speichervorrichtungen kann sende- oder empfangsseitig zusätzlich die so rekonstruierte Bitallokationstabelle in der BAT-Speichervorrichtung abgelegt werden.

Wird gemäß Figur 3 im Schritt S3' hingegen festgestellt, dass eine maximale Anzahl von abgespeicherten Bitallokationstabellen noch nicht erreicht ist, so wird wiederum in einem Schritt S4 die ermittelte Bitallokationstabelle abgespeichert und indiziert sowie in einem Schritt S5 zur Realisierung eines BAT-Abgleichs während einer Signalisierung übertragen.

Auf diese Weise erhält man wiederum eine Verringerung des Signalisierungs-Overheads in einem OFDM-Datenübertragungssystem, wodurch sich die Nutzdatenrate weiter erhöhen lässt.

Die Grenze, bis zu der eine Übertragung des Index I (M = Anzahl der Tabelleneinträge) sowie die Nummern der sich ändernden Unterträger (L) sinnvoll ist, berechnet sich wie folgt:

$$\text{m} \times \text{N}_{\text{NUTZ}} > \text{ld(M)} + (\text{L} \times \text{ld} (\text{N}_{\text{NUTZ}}) \times \text{m})$$

$$\text{L} < (\text{m} \times \text{N}_{\text{NUTZ}} - \text{ld(M)})/(\text{ld} (\text{N}_{\text{NUTZ}} \times \text{m}))$$

$$\text{L} < 32.$$

Mit beispielsweise $N_{\text{NUTZ}}$ = 256, m = 3 und M = 32 ergibt sich damit, dass diese Art der Übermittlung nur dann sinnvoll ist, wenn sich maximal 31 Unterträger ändern bzw. verschieden zur ermittelten Bitallokationstabelle sind.

Eine Erweiterung dieser Implementierung besteht in der Möglichkeit, dass die BAT-Speichervorrichtung teilweise statisch ist bzw. einen Bereich mit fest vorbestimmten Bitallokationstabellen aufweist. Genauer gesagt wird ein Bereich mit möglichen Bitkonstellationen bzw. Bitallokationstabellen bereits vorbelegt, wodurch sich eine gezielte Anpassung an jeweilige Kanaleigenschaften realisieren lässt. Für den statischen Teil der Speichervorrichtung bzw. der Look-up-Tabelle LUT wäre dann kein Schreib-/Lesespeicher RAM notwendig, und man könnte mit Hilfe einer umfangreichen Nur-Lese-Speichervorrichtung (ROM) eine BAT-Speichervorrichtung realisieren, mit der L (fast immer) kleiner als der Grenzwert

$$(m \times N_{NUTZ} - ld\ (M))/(ld\ (N_{NUTZ} \times m))$$

ist.

Ausführungsbeispiel 3

Zur weiteren Verringerung des Signalisierungs-Overheads kann neben oder zusätzlich zu den vorstehend beschriebenen Verfahren auch eine intelligente Differenzbetrachtung durchgeführt werden. Beispielsweise kann der Signalisierungsaufwand weiter reduziert werden, indem eine Zuweisung von Bit- und Leistungsverteilungen für Subkanalgruppen bzw. Unterträgergruppen durchgeführt wird. Dies hat den Vorteil, dass bei Zusammenfassung von 1 Bits zu einer Unterträgergruppe der Signalisierungsaufwand um den Faktor 1 gesenkt werden kann.

Demzufolge bestehen Bitallokationstabellen nunmehr aus einer Vielzahl von Unterträgergruppen mit einer Vielzahl von dazugehörigen Gruppen-Bitwerten. Eine derartige blockweise Zuweisung von Modulationsverfahren führt jedoch grundsätzlich zu einer schlechteren Adaption an die Kanaleigenschaften, weshalb eine Erhöhung der Bitfehlerrate zu erwarten ist. Insbesondere im Falle einer Powerline-Übertragungsumgebung liegt jedoch auf Grund der geringen Bandbreite nur eine geringe Frequenzselektivität des Kanals vor, so dass auch nur eine langsame Veränderung des Signal/Rauschverhältnisses SNR zwischen benachbarten Unterträgern auftreten wird. Grundsätzlich kann sich eine Bitzuweisung bzw. Bitallokation am minimalen SNR der Blöcke bzw. Gruppen orientieren, so dass hierdurch auch für den schlechtesten Unterträger der Gruppe eine ausreichende Bitfehlerrate gesichert werden kann. Vorzugsweise erfolgt bei einer derartigen Reduzierung des Signalisierungs-Overheads eine Zuweisung bzw. Bitallokation mit dem Bitladealgorithmus von CHOW CIOFFI und BINGHAM mit Leistungsskalierung.

Führt man diese blockweise Zuteilung der Modulationsverfahren durch und verzichtet hierbei auf eine Leistungsanpassung, so wird für die Signalisierung bei Verwendung der oben angenommenen Modulationswertigkeit und Coderate weniger als 20 Prozent eines OFDM-Systems benötigt. Dies gestattet eventuell die zusätzliche Nutzung von Spreiztechniken zur Übermittlung der Bitloading-Information bzw. Bitallokationstabelle BAT bei stark gestörten Kanälen.

Nachfolgend wird eine Empfangs- und Sendevorrichtung zum Durchführen des vorstehend beschriebenen Verfahrens erläutert.

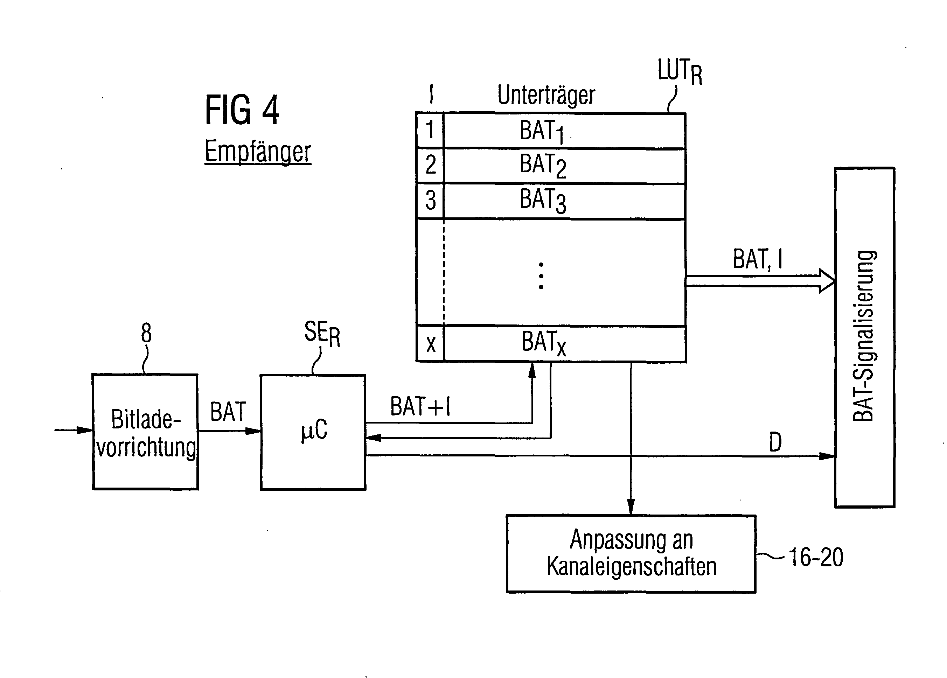

Figur 4 zeigt eine vereinfachte Blockdarstellung eines Empfängers, wobei das Bezugszeichen 8 eine Bitladevorrichtung zum Durchführen eines Bitlade-Algorithmus bezeichnet. Beispielsweise auf der Grundlage von Signal/Rausch-Verhältnissen wird in dieser Bitladevorrichtung 8 eine jeweils aktuelle Bitallokationstabelle BAT ermittelt und einer Empfangs-Steuereinheit $SE_R$ zum Auswerten der erzeugten Bitallokationstabelle BAT zugeführt. Die Empfangs-Steuereinheit ist beispielsweise ein Mikroprozessor oder Mikrocomputer. Der Empfänger besitzt ferner eine BAT-Speichervorrichtung $LUT_R$ zum Speichern einer Vielzahl von Bitallokationstabellen BAT1 bis BATx sowie dazugehöriger Indizes I = 1 bis x. Zur Anpassung an jeweilige Kanaleigenschaften können beispielsweise die aus dem Stand der Technik gemäß Figur 1 bekannten Funktionsblöcke derart in Abhängigkeit von einer jeweiligen Bitallokationstabelle BAT angesteuert werden, dass sich eine optimale Anpassung an jeweilige Übertragungseigenschaften eines Kanals ergeben.

Zur Realisierung eines BAT-Abgleichs während einer Signalisierung wird demzufolge lediglich ein Index I übertragen, wenn die von der Bitladevorrichtung 8 erzeugte Bitallokationstabelle BAT mit einer in der BAT-Speichervorrichtung $LUT_R$ gespeicherten Bitallokationstabellen BAT1 bis BATx übereinstimmt.

Ist dies nicht der Fall, so wird gemäß dem in Figuren 2 und 3 beschriebenen Verfahren die erzeugte Bitallokationstabelle BAT indiziert und gemeinsam mit ihrem Index I in der BAT-Speichervorrichtung $LUT_R$ abgelegt und zur Übertragung freigegeben.

Weiterhin kann gemäß Figur 4 eine Differenzbetrachtung und/oder Gruppierung der ermittelten Bitallokationstabelle derart durchgeführt werden, dass eine Differenz D zu einer nächstkommenden Bitallokationstabelle ermittelt und übertragen und/oder eine Gruppierung der erzeugten Bitallokationstabelle gemäß dem vorstehend beschriebenen Verfahren durchgeführt wird. In jedem Fall ergibt sich eine verringerte Datenmenge, da entweder lediglich der Index I oder der Index I mit der Differenz D zur nächstkommenden Bitallokationstabelle übertragen werden muss.

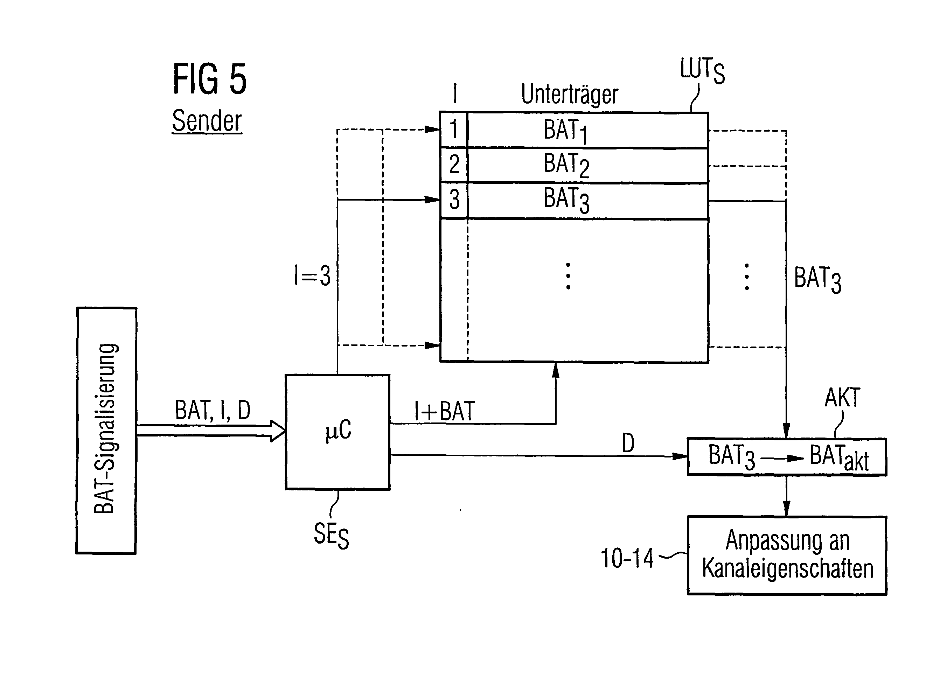

Figur 5 zeigt eine vereinfachte Blockdarstellung einer erfindungsgemäßen Sendevorrichtung, wobei gleiche Bezugszeichen wiederum gleiche oder ähnliche Elemente bezeichnen und auf eine wiederholte Beschreibung nachfolgend verzichtet wird.

Gemäß Figur 5 werden in einem Sender über den Rück- bzw. Steuerkanal eine Bitallokationstabelle BAT, ein Index I und/oder eine Differenz D empfangen und von einer Sende-Steuereinheit $SE_s$ entsprechend den vorstehend beschriebenen Verfahren ausgewertet. Genauer gesagt werden beim Empfang einer Bitallokationstabelle mit dazugehörigem Index I diese Werte in der sendeseitigen BAT-Speichervorrichtung $LUT_s$ abgelegt, wodurch sich eine Kopie der empfangsseitigen BAT-Speichervorrichtung ergibt. Für den Fall, dass lediglich ein Index I übertragen wird, steuert die Sende-Steuereinheit $SE_s$ die BAT-Speichervorrichtung $LUT_s$ derart an, dass die unter dem jeweiligen Index I abgelegte Bitallokationstabelle BAT zur Anpassung an Kanaleigenschaften nicht dargestellten Funktionsblöcken 10 bis 14 zur Verfügung gestellt werden. Ferner kann für den Fall einer Differenzbetrachtung und/oder intelligenten Differenzbetrachtung der übertragene Index I und eine dazugehörige Differenz von der Sende-Steuereinheit $SE_s$ derart ausgewertet werden, dass mittels des Index I die nächstkommende Bitallokationstabelle in der BAT-Speichervorrichtung ausgewählt wird und einer BAT-Aktualisierungsvorrichtung AKT zugeführt wird. Unter Verwendung des zusätzlich übertragenen Differenzwertes D und der nächstkommenden Bitallokationstabelle $BAT_3$ wird anschließend in der BAT-Aktualisierungsvorrichtung AKT die aktuelle Bitallokationstabelle $BAT_{akt}$ rekonstruiert und zur Anpassung an die Kanaleigenschaften ausgegeben. In gleicher Weise kann die Sende-Steuereinheit eine jeweils in der Empfangsvorrichtung durchgeführte Gruppierung der Bitallokationstabelle auflösen und eine jeweilige Anpassung durchführen. Auf diese Weise kann ein Signalisierungs-Overhead in einem Multiträgersystem mit dynamischer Bitallokation kostengünstig reduziert werden und eine Nutzdatenrate verbessert werden.

Die vorliegende Erfindung wurde aus Gründen der Übersichtlichkeit lediglich auf eine Datenübertragung in einer Richtung beschrieben. Sie bezieht sich jedoch in gleicher Weise auf eine Datenübertragung in entgegengesetzter Richtung. Ferner wurde die Erfindung anhand eines OFDM-Datenübertragungssystems beschrieben. Sie ist jedoch nicht darauf beschränkt und umfasst vielmehr alle weiteren drahtlosen oder leitungsgebundenen Multiträgersysteme mit dynamischer Bitallokation.

**Patentansprüche**

1. Verfahren zur Verringerung eines Signalisierungsaufwands in einem Multiträgersystem mit dynamischer Bitallokation mit den Schritten:

   a) Ermitteln der Übertragungseigenschaften eines Übertragungskanals (S1);
   b) Ermitteln einer Bitallokationstabelle (BAT) in Abhängigkeit von den ermittelten Übertragungseigenschaften (S2);
   c) Vergleichen der ermittelten Bitallokationstabelle (BAT) mit in einer Speichervorrichtung (LUT) gespeicherten und indizierten Bitallokationstabellen (S3); wobei
   d) bei Übereinstimmung der ermittelten Bitallokationstabelle mit einer der gespeicherten Bitallokationstabellen lediglich ein Index (I) der übereinstimmenden gespeicherten Bitallokationstabelle (BAT) zur Realisierung eines BAT-Abgleichs während einer Signalisierung übertragen wird (S6), **gekennzeichnet durch** die weiteren Schritte:

      bei fehlender Übereinstimmung der ermittelten Bitallokationstabelle mit einer der gespeicherten Bitallokationstabellen

   e) Überprüfung einer Anzahl von in der BAT-Speichervorrichtung (LUT) gespeicherten Bitallokationstabellen (S3'); wobei bei Überschreitung einer maximalen Anzahl (MAX) von in der BAT-Speichervorrichtung (LUT) gespeicherten Bitallokationstabellen

      f1) eine Bestimmung einer Differenz (D) zu einer nächstkommenden gespeicherten Bitallokationstabelle (S7); und
      f2) eine Übertragung der Differenz (D) und des Index (I) der nächstkommenden gespeicherten Bitallokationstabelle (S8) durchgeführt wird.

2. Verfahren nach Patentanspruch 1,
   **gekennzeichnet durch** die weiteren Schritte:

      bei fehlender Überschreitung der maximalen Anzahl (MAX) von in der BAT-Speichervorrichtung (LUT) gespeicherten Bitallokationstabellen

      g1) Abspeicherung der ermittelten Bitallokationstabelle in der BAT-Speichervorrichtung (LUT) und Zuordnung eines Indexes (S4); und
      g2) Übertragung der ermittelten Bitallokationstabelle mit dem zugeordneten Index (I) zur Realisierung eines BAT-Abgleichs während einer Signalisierung (S5).

3. Verfahren nach Patentanspruch 1,
   **gekennzeichnet durch** die weiteren Schritte:

bei fehlender Übereinstimmung der ermittelten Bitallokationstabelle mit einer der gespeicherten Bitallokationstabellen und keiner Überschreitung der maximalen Anzahl (MAX) von in der BAT-Speichervorrichtung (LUT) gespeicherten Bitallokationstabellen

    g1) Abspeicherung der ermittelten Bitallokationstabelle in der BAT-Speichervorrichtung (LUT) und Zuordnung eines Indexes (S4); und
    g2) Übertragung der ermittelten Bitallokationstabelle mit dem zugeordneten Index (I) zur Realisierung eines BAT-Abgleichs während einer Signalisierung (S5).

**4.** Verfahren nach einem der Patentansprüche 1 bis 3,
**dadurch gekennzeichnet, dass** die Bitallokationstabellen eine Vielzahl von Unterträgern und eine Vielzahl von dazugehörigen Bitwerten je Unterträger aufweisen.

**5.** Verfahren nach einem der Patentansprüche 1 bis 3,
**dadurch gekennzeichnet, dass** die Bitallokationstabellen eine Vielzahl von Unterträger-Gruppen und eine Vielzahl von dazugehörigen Gruppen-Bitwerten je Unterträgergruppe aufweisen.

**6.** Verfahren nach einem der Patentansprüche 1 bis 5,
**dadurch gekennzeichnet, dass** die Bitallokationstabellen zur Realisierung einer adaptiven Modulation verwendet werden.

**7.** Verfahren nach einem der Patentansprüche 1 bis 6,
**dadurch gekennzeichnet, dass** das Multiträgersystem ein OFDM-, MC-CDMA- und/oder CDMA-Datenübertragungssystem darstellt.

**8.** Verfahren nach einem der Patentansprüche 1 bis 7,
**dadurch gekennzeichnet, dass** die BAT-Speichervorrichtung (LUT) einen Bereich mit fest vorbestimmten Bitallokationstabellen aufweist.

**9.** Empfangsvorrichtung zur Verringerung eines Signalisierungsaufwandes in einem Multiträgersystem mit dynamischer Bitallokation mit:

einer Bitladevorrichtung (8) zum Erzeugen von Bitallokationstabellen (BAT) in Abhängigkeit von ermittelten Kanaleigenschaften;
einer Empfangs-Steuereinheit (SE_R) zum Auswerten der erzeugten Bitallokationstabellen (BAT); und
einer BAT-Speichervorrichtung (LUT) zum Speichern einer Vielzahl von Bitallokationstabellen, wobei die BAT-Speichervorrichtung (LUT) ferner für jede Bitallokationstabelle einen Index (I) abspeichert, die Empfangs-Steuereinheit (SE_R) lediglich einen Index (I)
zur Realisierung eines BAT-Abgleichs während einer Signalisierung zur Übertragung ausgibt, wenn die erzeugte Bitallokationstabelle mit einer in der BAT-Speichervorrichtung (LUT) gespeicherten Bitallokationstabelle übereinstimmt, und
eine Anpassung an geänderte Kanaleigenschaften in Abhängigkeit von der erzeugten Bitallokationstabelle erfolgt, **dadurch gekennzeichnet, dass**
die Empfangs-Steuereinheit (SE_R) eine Anzahl von in der BAT-Speichervorrichtung (LUT) abgespeicherten Bitallokationstabellen überprüft und bei Überschreitung einer maximalen Anzahl (MAX) von in der BAT-Speichervorrichtung (LUT) gespeicherten Bitallokationstabellen eine Differenz (D) zu einer nächstkommenden gespeicherten Bitallokationstabelle bestimmt und den Index (I) der nächstkommenden Bitallokationstabelle sowie die Differenz (D) zur nächstkommenden gespeicherten Bitallokationstabelle zur Realisierung eines BAT-Abgleichs während einer Signalisierung zur Übertragung ausgibt.

**10.** Empfangsvorrichtung nach Patentanspruch 9,
**dadurch gekennzeichnet, dass** die Empfangs-Steuereinheit (SE_R) die erzeugte Bitallokationstabelle mit einem dazugehörigen Index (I) in der BAT-Speichervorrichtung (LUT) ablegt und zur Realisierung eines BAT-Abgleichs während einer Signalisierung zur Übertragung ausgibt, wenn die erzeugte Bitallokationstabelle mit keiner der in der BAT-Speichervorrichtung (LUT) gespeicherten Bitallokationstabellen übereinstimmt und keine Überschreitung der maximalen Anzahl (MAX) von in der BAT-Speichervorrichtung (LUT) gespeicherten Biallokationstabellen auftritt.

**11.** Sendevorrichtung zur Verringerung eines Signalisierungsaufwands in einem Multiträgersystem mit dynamischer Bitallokation mit:

einer Sende-Steuereinheit (SE$_S$) zum Auswerten einer empfangenen Bitallokationstabelle und/oder eines Index (I) und/oder einer Differenz (D) zu einer nächstkommenden Bitallokationstabelle; und
einer BAT-Speichervorrichtung (LUT) zum Speichern der empfangenen Bitallokationstabellen und der dazugehörigen Indizes,

wobei eine Anpassung an geänderte Kanaleigenschaften in Abhängigkeit von der unter dem empfangenen Index (I) abgelegten Bitallokationstabelle erfolgt, **gekennzeichnet durch**
eine BAT-Aktualisierungsvorrichtung (AKT) zum Aktualisieren einer über einen empfangenen Index (I) ausgewählten Bitallokationstabelle in Abhängigkeit von einer empfangenen Differenz (D).

**12.** Sende- und/oder Empfangsvorrichtung nach einem der Patentansprüche 9 bis 11,
**dadurch gekennzeichnet, dass** das Multiträgersystem ein OFDM-, MC-CDMA- und/oder CDMA-Datenübertragungssystem darstellt.

**13.** Sende- und/oder Empfangsvorrichtung nach einem der Patentansprüche 9 bis 11,
**dadurch gekennzeichnet, dass** die Anpassung an die geänderten Kanaleigenschaften mittels einer adaptiven Modulationsvorrichtung erfolgt.

**Claims**

**1.** Method for reducing signalling overhead in a multicarrier system with dynamic bit allocation with the stages:

a) establishment of the transmission characteristics of a transmission channel (S1);
b) establishment of a bit allocation table (BAT) based on the established transmission characteristics (S2);
c) comparison of the established bit allocation table (BAT) with bit allocation tables stored and indexed in a storage device (LUT) (S3); whereby
d) if the established bit allocation table corresponds to one of the stored bit allocation tables, only an index I of the corresponding stored bit allocation table (BAT) is transmitted to implement a BAT alignment during signalling (S6),
**characterized by** the following stages:

if the established bit allocation table does not correspond to one of the stored bit allocation tables

e) verification of a number of bit allocation tables stored in the BAT storage device (LUT) (S3'); whereby if a maximum number (MAX) of bit allocation tables stored in the BAT storage device (LUT) is exceeded

f1) determination of a difference (D) in respect of a subsequent stored bit allocation table (S7); and
f2) transmission of the difference (D) and the index (I) of the subsequent stored bit allocation table (S8).

**2.** Method according to claim 1, **characterized by** the further stages:

If the maximum number (MAX) of bit allocation tables stored in the BAT storage device (LUT) is not exceeded

g1) storage of the established bit allocation table in the BAT storage device (LUT) and assignment of an index (S4); and
g2) transmission of the established bit allocation table with the assigned index (I) to implement a BAT alignment during signalling (S5) .

**3.** Method according to claim 1, **characterized by** the further stages:

If the established bit allocation table does not correspond to one of the stored bit allocation tables and the maximum number (MAX) of the bit allocation tables stored in the BAT storage device (LUT) is not exceeded

g1) storage of the established bit allocation table in the BAT storage device (LUT) and assignment of an index (S4); and

g2) transmission of the established bit allocation table with the assigned index (I) to implement a BAT alignment during signalling (S5) .

4.  Method according to one of claims 1 to 3,
    **characterized in that** the bit allocation tables comprise a number of subcarriers and a number of corresponding bit values per subcarrier.

5.  Method according to one of claims 1 to 3, **characterized in that** the bit allocation tables comprise a number of subcarrier groups and a number of corresponding group bit values per subcarrier group.

6.  Method according to one of claims 1 to 3,
    **characterized in that** the bit allocation tables are used to implement adaptive modulation.

7.  Method according to one of claims 1 to 5,
    **characterized in that** the multicarrier system represents an OFDM, MC-CDMA and/or CDMA data transmission system.

8.  Method according to one of claims 1 to 7,
    **characterized in that** the BAT storage device (LUT) comprises a domain with permanently predefined bit allocation tables.

9.  Receiver device for reducing signalling overhead in a multicarrier system with dynamic bit allocation with:

    a bit loading device (8) for generating bit allocation tables (BAT) based on established channel characteristics;
    a receiver control unit ($SE_R$) for analyzing the generated bit allocation tables (BAT); and
    a BAT storage device (LUT) for storing a number of bit allocation tables, with
    the BAT storage device (LUT) also storing an index (I) for each bit allocation table, with
    the receiver control unit ($SE_R$) only outputting an index (I) for transmission to implement a BAT alignment during signalling, if the generated bit allocation table corresponds to a bit allocation table stored in the BAT storage device (LUT), and
    adjustment to modified channel characteristics being carried out based on the generated bit allocation table,

    **characterized in that** the receiver control unit ($SE_R$) checks a number of bit allocation tables stored in the BAT storage device (LUT) and, if a maximum number (MAX) of bit allocation tables stored in the BAT storage device (LUT) is exceeded, determines a difference (D) in respect of a subsequent stored bit allocation table and outputs the index (I) of the subsequent bit allocation table and the difference (D) in respect of the subsequent stored bit allocation table for transmission to implement a BAT alignment during signalling.

10. Receiver device according to claim 9,
    **characterized in that** the receiver control unit ($SE_R$) stores the generated bit allocation table with an associated index (I) in the BAT storage device (LUT) and outputs it for transmission to implement a BAT synchronization during signalling if the bit allocation table does not match any of the bit allocation tables stored in the BAT storage device (LUT) and there is no occurrence of the maximum number of bit allocation tables stored in the BAT storage device (LUT) being exceeded.

11. Transmitter device for reducing signalling overhead in a multicarrier system with dynamic bit allocation with:

    a transmitter control unit ($SE_S$) for analyzing a received bit allocation table and/or an index (I) and/or a difference (D) in respect of a subsequent bit allocation table; and
    a BAT storage device (LUT) for storing the received bit allocation tables and the corresponding indices, whereby adjustment to modified channel characteristics takes place based on the bit allocation table stored under the received index (I), **characterized in that**
    a BAT update device (AKT) for updating a bit allocation table selected via a received index (I) based on a received difference (D) .

12. Transmitter and/or receiver device according to one of claims 9 to 11,
    **characterized in that** the multicarrier system represents an OFDM, MC-CDMA and/or CDMA data transmission system.

**13.** Transmitter and/or receiver device according to one of claims 9 to 11,
**characterized in that** adjustment to the modified channel characteristics takes place by means of an adaptive modulation device.

**Revendications**

**1.** Procédé pour réduire un effort de signalisation dans un système multiporteuses avec attribution dynamique de bits comprenant les étapes :

a) détermination des propriétés de transmission d'un canal de transmission (S1) ;
b) détermination d'un tableau d'attribution de bits (BAT) en fonction des propriétés de transmission (S2) déterminées ;
c) comparaison du tableau d'attribution de bits (BAT) déterminé avec des tableaux d'attribution de bits (S3) stockés dans un dispositif de stockage (LUT) et indexés ;
d) en cas de concordance du tableau d'attribution de bits déterminé avec l'un des tableaux d'attribution de bit stockés, uniquement un index (I) du tableau d'attribution de bits (BAT) stocké concordant est transmis pour la réalisation d'un alignement BAT pendant une signalisation (S6), **caractérisé par** les autres étapes :

en cas d'absence de concordance du tableau d'attribution de bits déterminé avec l'un des tableaux d'attribution de bit stockés

e) vérification d'un nombre de tableaux d'attribution de bits (S3') stockés dans le dispositif de stockage BAT (LUT) ; en cas de dépassement d'un nombre maximum (MAX) de tableaux d'attribution de bit stockés dans le dispositif de stockage BAT (LUT)

f1) une détermination d'une différence (D) par rapport à un tableau d'attribution de bits (S7) stocké suivant, et
f2) une transmission de la différence (D) et de l'index (I) du tableau d'attribution de bit (S8) stocké suivant étant effectuée.

**2.** Procédé selon la revendication 1,
**caractérisé par** les autres étapes:

en cas d'absence de dépassement du nombre maximum (MAX) de tableaux d'attribution de bits stockés dans le dispositif de stockage BAT (LUT)

g1) stockage du tableau d'attribution de bits déterminé dans le dispositif de stockage BAT (LUT) et attribution d'un index (S4) ; et
g2) transmission du tableau d'attribution de bits déterminé avec l'index (I) attribué pour la réalisation d'un alignement BAT pendant une signalisation (S5).

**3.** Procédé selon la revendication 1,
**caractérisé par** les autres étapes :

en cas d'absence de concordance du tableau d'attribution de bits déterminé avec l'un des tableaux d'attribution de bit stockés et en cas d'absence de dépassement du nombre maximum (MAX) de tableaux d'attribution de bit stockés dans le dispositif de stockage BAT (LUT)

g1) mémorisation du tableau d'attribution de bits déterminé dans le dispositif de stockage BAT (LUT) et attribution d'un index (S4) ; et
g2) transmission du tableau d'attribution de bits déterminé avec l'index (I) attribué pour la réalisation d'un alignement BAT pendant une signalisation (S5).

**4.** Procédé selon l'une quelconque des revendications 1 à 3,
**caractérisé en ce que** les tableaux d'attribution de bits présentent une pluralité de sous-porteuses et une pluralité de valeurs binaires y relatives par sous-porteuse.

**5.** Procédé selon l'une quelconque des revendications 1 à 3,

**caractérisé en ce que** les tableaux d'attribution de bits présentent une pluralité de groupes de sous-porteuses et une pluralité de valeurs binaires de groupes y relatives par groupe de sous-porteuses.

6. Procédé selon l'une quelconque des revendications 1 à 5,
   **caractérisé en ce que** les tableaux d'attribution de bits sont utilisés pour la réalisation d'une modulation adaptative.

7. Procédé selon l'une quelconque des revendications 1 à 6,
   **caractérisé en ce que** le système multiporteuses représente un système de transmission de données OFDM, MC-CDMA et/ou CDMA.

8. Procédé selon l'une quelconque des revendications 1 à 7,
   **caractérisé en ce que** le dispositif de stockage BAT (LUT) présente une zone avec des tableaux d'attribution de données prédéfinis de façon fixe.

9. Dispositif de réception pour réduire un effort de signalisation dans un système multiporteuses avec attribution dynamique de bits comprenant :

   un dispositif de chargement de bits (8) pour générer des tableaux d'attribution de bits (BAT) en fonction de propriétés de canal déterminées ;
   une unité de commande de réception ($SE_R$) pour l'évaluation des tableaux d'attribution de bits (BAT) générés ; et
   un dispositif de stockage BAT (LUT) pour le stockage d'une pluralité de tableaux d'attribution de bits, le dispositif de stockage BAT (LUT) stockant un index (I) également pour chaque tableau d'attribution de bits,
   l'unité de commande de réception ($SE_R$) émettant uniquement un index (I) pour la réalisation d'un alignement BAT pendant une signalisation pour la transmission, si le tableau d'attribution de bits généré coïncide avec un tableau d'attribution de bits stocké dans le dispositif de stockage BAT (LUT), et une adaptation des propriétés de canal modifiées s'effectuant en fonction du tableau d'attribution de bits généré, **caractérisé en ce que** l'unité de commande de réception ($SE_R$) vérifie un nombre de tableaux d'attribution de bits stockés dans le dispositif de stockage BAT (LUT) et, en cas de dépassement d'un nombre maximum (MAX) de tableaux d'attribution de bits stockés dans le dispositif de stockage BAT (LUT), détermine une différence (D) par rapport à un tableau d'attribution de bits stocké suivant et émet pour la transmission l'index (I) du tableau d'attribution de bits suivant ainsi que la différence (D) par rapport au tableau d'attribution de bits stocké suivant pour la réalisation d'un alignement BAT pendant une signalisation.

10. Dispositif de réception selon la revendication 9,
    **caractérisé en ce que** l'unité de commande de réception ($SE_R$) dépose le tableau d'attribution de bits généré avec un index (I) y relatif dans le dispositif de stockage BAT (LUT) et le sort pour la réalisation d'un alignement BAT pendant une signalisation pour la transmission si le tableau d'attribution de bits généré ne coïncide avec aucun des tableaux d'attribution de bits stockés dans le dispositif de stockage BAT (LUT) et si aucun dépassement du nombre maximum (MAX) de tableaux d'attribution de bits stockés dans le dispositif de stockage BAT (LUT) n'apparaît.

11. Dispositif d'émission pour réduire un effort de signalisation dans un système multiporteuses avec attribution dynamique de bits comprenant :

    un dispositif de commande d'émission ($SE_S$) pour l'évaluation d'un tableau d'attribution de bits reçu et/ou d'un index (I) et/ou d'une différence (D) par rapport à un tableau d'attribution de bits suivant ; et
    un dispositif de stockage BAT (LUT) pour le stockage des tableaux d'attribution de données reçus et des index y relatifs, une adaptation à des propriétés de canal modifiées s'effectuant en fonction du tableau d'attribution de bits déposé sous l'index (I) reçu, **caractérisé par**
    un dispositif d'actualisation BAT (AKT) pour l'actualisation d'un tableau d'attribution de bits sélectionné au moyen d'un index (I) reçu en fonction d'une différence (D) reçue.

12. Dispositif d'émission et/ou de réception selon l'une quelconque des revendications 9 à 10,
    **caractérisé en ce que** le système multiporteuses représente un système de transmission de données OFDM, MC-CDMA et/ou CDMA.

13. Dispositif d'émission et/ou de réception selon l'une quelconque des revendications 9 à 11,
    **caractérisé en ce que** l'adaptation aux propriétés de canal modifiées s'effectue au moyen d'un dispositif de modulation adaptatif.

FIG 1
Stand der Technik

Sender

Empfänger

Eingangsdaten

Ausgangsdaten

BAT-Signalisierung

Kanal

RF-Mod.

RF-Demod.

S/P

Kodierung

Impulsformung

$\exp(-j\omega_n t)$  $\exp(j\omega_n t)$

$+$

$\exp(j\omega_n t)$  $\exp(-j\omega_n t)$

Empfangsfilter

Dekodierung

P/S

RefX

BAT$_S$

BAT$_R$

# FIG 2

```
        ┌──────────┐
        │  START   │
        └──────────┘
             │
             ▼
     ┌──────────────────┐
     │   Bestimmung     │ ─── S1
     │ Kanal-Charakteristika │
     └──────────────────┘
             │
             ▼
     ┌──────────────┐
     │  Bestimmung  │ ─── S2
     │     BAT      │
     └──────────────┘
             │
             ▼
     S3 ──◇ BAT in LUT ? ◇─── nein
             │ ja                    │
             ▼                       ▼
  S6 ─┌──────────────┐    ┌──────────────────┐
     │  Übertragung  │    │    BAT in LUT     │ ─── S4
     │ Index von BAT │    │  speichern und    │
     └──────────────┘    │   indizieren      │
                          └──────────────────┘
                                  │
                                  ▼
                          ┌──────────────┐
                          │  Übertragung │ ─── S5
                          │  Index + BAT │
                          └──────────────┘
```

## FIG 3

```
                    ┌─────────┐
                   ( START     )
                    └────┬────┘
                         │
              ┌──────────▼──────────┐
              │    Bestimmung       │
              │ Kanal-Charakteristika├──── S1
              └──────────┬──────────┘
                         │
              ┌──────────▼──────────┐
              │    Bestimmung       ├──── S2
              │       BAT           │
              └──────────┬──────────┘
                         │
                         ▼
         S3 ──◇  BAT in LUT ?  ◇──── nein ──────┐
                    │                            │
                    │ ja                         ▼
                    │          nein ──◇ Anzahl BAT  ◇──── S3'
                    │                 │    >    │
                    │                 │   MAX   │
                    ▼                 │   │ ja
          ┌──────────────┐           │   │
          │  Übertragung │           │   │
          │ Index von BAT│           │   │
          └───────┬──────┘           ▼   ▼
               │                ┌──────────┐  ┌──────────────┐
              S6                │ BAT in LUT│  │  Bestimmung  │
                                │speichern  │  │  Differenz zu│
                                │und        │  │nächstkommender│
                                │indizieren │  │    BAT       │
                                └─────┬─────┘  └──────┬───────┘
                                   S4              S7
                                      │                │
                                      ▼                ▼
                                ┌──────────┐  ┌──────────────┐
                                │Übertragung│  │ Übertragung  │
                                │Index + BAT│  │Index + Differenz│
                                └──────────┘  └──────────────┘
                                    S5              S8
```

16

# FIG 4

## Empfänger

EP 1 382 170 B1

$LUT_R$

| I | Unterträger |
|---|---|
| 1 | $BAT_1$ |
| 2 | $BAT_2$ |
| 3 | $BAT_3$ |
| ⋮ | |
| x | $BAT_x$ |

BAT, I

BAT-Signalisierung

8

Bitlade-vorrichtung

BAT

$SE_R$

μC

BAT+I

D

Anpassung an Kanaleigenschaften

16-20

FIG 5
Sender

LUT$_S$

I | Unterträger
1 | BAT$_1$
2 | BAT$_2$
3 | BAT$_3$

I=3

BAT$_3$

BAT-Signalisierung

BAT, I, D

μC

I+BAT

D

SE$_S$

AKT

BAT$_3$ → BAT$_{akt}$

10-14 — Anpassung an Kanaleigenschaften

EP 1 382 170 B1

**EP 1 382 170 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9920027 A